# FASCICULE DE BREVET EUROPEEN

(11) **EP 0 679 827 B1**
(45) Date de publication et mention de la délivrance du brevet: **20.01.1999**
(21) Numéro de dépôt: 95400652.4
(22) Date de dépôt: 23.03.1995
(51) Int. Cl.: F16L 19/10

(54) **Dispositif de raccordement pour circuit hydraulique haute pression**
Kupplungsvorrichtung für Hochdruckhydraulikkreislauf
Coupling device for a hydraulic circuit under high pressure

(30) Priorité: 25.04.1994 FR 9404967
(43) Date de publication de la demande: 02.11.1995
(73) Titulaire: AUTOMOBILES PEUGEOT, 75116 Paris (FR); AUTOMOBILES CITROEN, 92200 Neuilly-sur-Seine (FR)
(72) Inventeur: Richard, Denis, F-94600 Choisy Le Roi (FR)
(74) Mandataire: Polus, Camille

(56) Documents cités:
- FR-A- 1 584 061
- GB-A- 2 083 583
- GB-A- 2 102 903
- US-A- 3 643 984
- US-A- 4 310 185

## Description

La présente invention est relative à un dispositif de raccordement, notamment pour circuit hydraulique haute pression dans le domaine de l'automobile.

On connaît d'après le document EP-A-0 219 228, un raccord hydraulique entre un corps délimitant un conduit de passage d'un fluide hydraulique et une extrémité d'un tube métallique de passage de ce même fluide, le conduit comportant une embouchure qui est formée de l'intérieur vers l'extérieur du corps de trois alésages coaxiaux successifs, respectivement un premier alésage et un deuxième alésage de diamètre plus grand qui se raccorde au premier alésage par un épaulement, et un troisième alésage fileté intérieurement, ce raccord étant muni d'un ensemble de raccordement comportant une garniture d'étanchéité en élastomère logée et serrée entre le tube et le premier alésage formant un logement annulaire de longueur supérieure à celle de la garniture, une bague de retenue du tube logée dans le deuxième alésage, en appui contre l'épaulement, et une douille filetée extérieurement vissée dans le troisième alésage, pour bloquer axialement la bague et le tube par rapport au corps.

Cependant, des problèmes d'étanchéité peuvent apparaître dans ce dispositif connu, en raison d'une dilatation lors d'une élévation de température, de la garniture d'étanchéité en élastomère bien supérieure à celle des composants en acier du dispositif de raccordement, risquant de provoquer ainsi une déformation permanente de ceux-ci après retour à la température ambiante.

GB-A-2 083 583 décrit un dispositif de raccordement, sans garniture d'étanchéité, comportant une rampe ménagée dans l'embouchure de raccordement du tube, destinée à coopérer de façon étanche avec une bague de retenue de ce tube emmanchée dans l'embouchure.

L'invention a pour but d'assurer une étanchéité parfaite d'un dispositif de raccordement subissant des changements de température, et ce par des moyens simples, fiables et au moindre coût.

A cet effet, l'invention a pour objet un raccord hydraulique tel que défini précédemment, caractérisé en ce que l'ensemble de raccordement est porté par le tube, et en ce que l'épaulement est sensiblement tronconique et constitue une rampe ayant une double fonction de coopération avec la garniture, pour comprimer cette dernière et la placer sous serrage entre le tube et le premier alésage, et avec une partie d'extrémité de forme complémentaire de la bague, pour déformer radialement cette bague en direction du tube lorsque la douille est vissée dans le corps.

Le raccord hydraulique suivant l'invention peut par ailleurs comporter une ou plusieurs des caractéristiques suivantes :
- le tube comporte un renflement et la bague comporte dans sa paroi interne un évidement adapté pour recevoir ledit renflement et assurer la retenue axiale du tube, dans la direction de l'extérieur vers l'intérieur du corps, et la rampe sert de guide pour la garniture d'étanchéité lors de la mise en place de cette garniture avec serrage contrôlé entre le tube et le premier alésage du corps ;
- le renflement du tube et une partie de l'évidement de la bague sont de forme sensiblement sphérique ;
- la longueur axiale du renflement est supérieure à celle de l'évidement de sorte que l'extrémité de la douille coopère avec le renflement et ainsi assure la retenue axiale du tube dans la direction de l'intérieur vers l'extérieur du corps ;
- la garniture d'étanchéité est adhérisée sur la face d'extrémité adjacente de la bague ;
- un dégagement est prévu entre le bord extérieur de la garniture et l'extrémité intérieure de la bague ;
- la longueur de l'ensemble bague et renflement est sensiblement égale ou supérieure à la distance séparant l'épaulement de l'extérieur du corps ;

Un exemple de réalisation de l'invention va maintenant être décrit en regard des dessins annexés, sur lesquels :
- la figure 1 est une vue en coupe longitudinale du dispositif selon l'invention à l'état monté ;
- la figure 2 représente vues en coupe longitudinale la bague et la garniture d'étanchéité ;
- la figure 3 illustre le montage du dispositif selon l'invention ; et
- la figure 4 montre l'impossibilité de monter ce dispositif à l'envers.

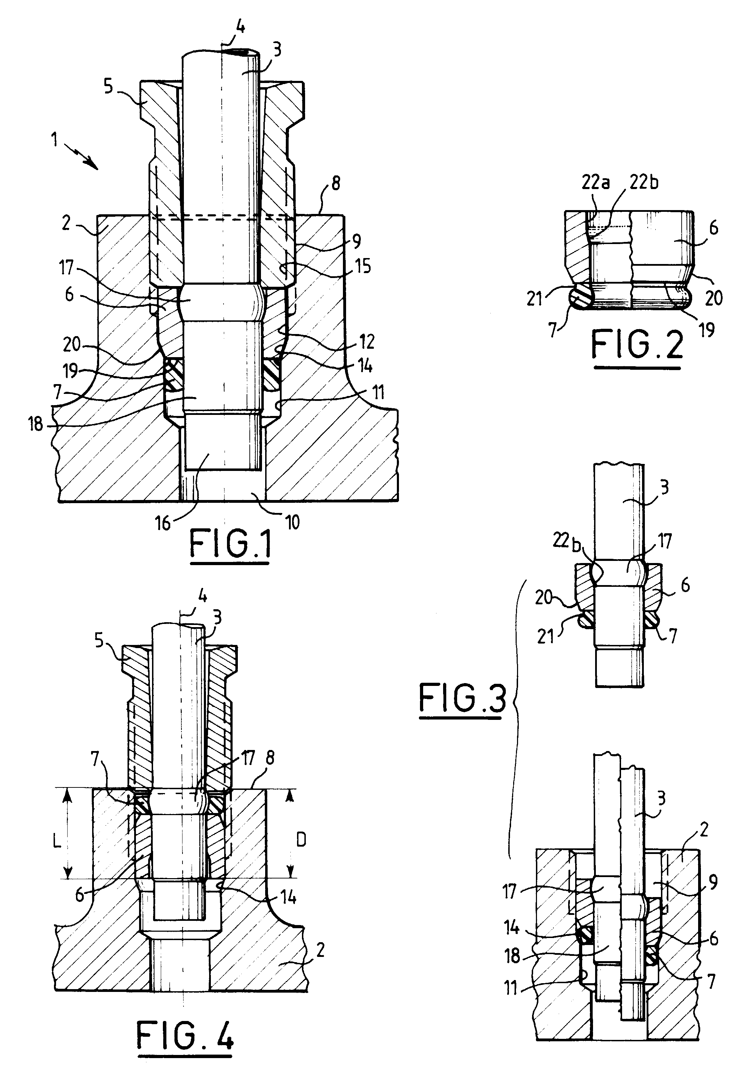

On voit sur la figure 1 un dispositif de raccordement ou raccord hydraulique 1 entre un corps 2, appartenant à un composant d'un circuit hydraulique, et un tube 3 d'axe 4. Ce raccord comprend en outre une douille 5, une bague 6 et une garniture d'étanchéité ou joint annulaire 7.

A partir d'un bord extérieur 8, le corps 2 est percé d'une embouchure étagée 9 d'axe 4 dans laquelle débouche un passage pour fluide 10 de même axe. Cet embouchure 9 est formée de l'intérieur vers l'extérieur du corps 2, de trois alésages ; un premier alésage 11, un deuxième alésage 12, de diamètre plus grand, qui se raccorde à l'alésage 11 par une surface conique 14 réalisant un épaulement, et un troisième alésage 15 fileté intérieurement.

Le tube 3 possède une extrémité libre 16 destinée à être insérée dans l'embouchure 9 jusque dans le passage pour fluide 10. A une distance prédéterminée de cette extrémité libre 16 est formé un renflement 17 de forme sensiblement sphérique. Le plus grand diamètre de ce renflement n'est que très légèrement supérieur à celui du tube 3. Un tronçon 18 de ce tube 3 compris entre le renflement 17 et l'extrémité libre 16 est une zone calibrée dont le diamètre a par exemple une tolérance égale à 0,05 mm.

Les figures 1 et 2 montrent la bague métallique 6 à l'extrémité intérieure 19 de laquelle est adhérisée la garniture d'étanchéité 7, par exemple un joint annulaire en caoutchouc du type élastomère. Une partie d'extrémité adjacente à cette extrémité 19 présente une surface conique 20 conjuguée de la surface conique 14 de l'embouchure 9. Un dégagement 21 est prévu entre le joint annulaire 7 et l'extrémité intérieure 19 de la bague 6.

Au voisinage de son extrémité opposée à celle où est fixée la garniture 7, la périphérie interne de la bague 6 est évidée pour délimiter une zone d'entrée 22a de plus grand diamètre et une zone d'appui 22b sensiblement sphérique dont la longueur est légèrement plus petite que celle du renflement 17. La longueur de la bague 6 est sensiblement plus grande que celle du deuxième alésage 12 dans lequel cette bague est insérée au montage.

On voit également sur la figure 1 la douille 5 d'axe 4, filetée extérieurement pour être en prise avec le filetage de l'alésage 15. Le diamètre interne de cette douille est continuement décroissant de l'extérieur vers l'intérieur tout en demeurant à son extrémité intérieure légèrement supérieur au diamètre du tube 3.

La mise en place du raccord hydraulique 1 est expliquée en regard des figures 3 et 4. La bague 6 et le joint 7 sont montés sur le tube 3 jusqu'au contact du renflement 17 sur l'appui sphérique 22b. Le diamètre du joint a augmenté sans pour autant gêner son passage dans l'embouchure 9 ; le joint 7 serre le tube 3 et maintient ainsi la bague 6 en place sur le tube. Puis l'ensemble formé par la bague, le joint et le tube est emmanché dans l'embouchure 9 jusqu'au contact du joint 7 sur la surface conique 14 qui va permettre de comprimer le joint et de le placer sous serrage contrôlé entre la zone calibrée 18 du tube 3 et l'alésage 11 de l'embouchure 9. Les très bons états de surface de la surface conique 14 et de l'angle de raccordement entre cette surface 14 et l'alésage 11 évitent une détérioration du joint 7. Le risque pour ce joint d'être pincé lors de cet emmanchement entre la bague 6 et la surface 14 est éliminé grâce au dégagement 21.

La douille 5, montée préalablement sur le tube 3, est ensuite vissée dans l'alésage 15 (figure 1) pour bloquer l'ensemble en prenant appui à la fois sur la face extérieure de la bague 6 et sur le haut du renflement 17 du tube qui est ainsi immobilisé par un léger serrage. Dans le cas où la douille n'est pas parfaitement en appui sur le renflement 17, la pression du fluide circulant dans le tube 3 et le conduit 10 maintient ce dernier plaqué sur la douille 5 sans affecter l'étanchéité.

Le jeu entre la zone calibrée 18 du tube 3 et le diamètre interne de la bague 6 est suffisamment faible pour éviter tout risque d'extrusion du joint. De plus, l'effort axial délivré par le couple de serrage de la douille 5 est supporté par la surface conique 20 de la bague 6 qui prend appui sur la surface conique 14 de l'embouchure 9. Cette appui oblique génère une composante radiale qui tend à réduire et même à supprimer le jeu, par déformation de la bague 6.

Le joint élastique 7 ainsi mis en place dans un logement annulaire délimité par l'alésage 11 et dont la longueur est supérieure à celle du joint, est soumis à un serrage et a toute latitude pour se dilater axialement en fonction des variations de température sans pour autant rétreindre le tube 3.

Ce dispositif permet également de rendre la fonction étanchéité indépendante de la fonction mécanique puisque le couple de serrage est supporté par la bague métallique 6 et la surface conique 14 de l'embouchure 9, l'élément élastique 7 n'étant pas sollicité.

Un mauvais montage de ce raccord hydraulique est impossible comme représenté à la figure 4. En effet, si un opérateur monte la bague 6 et le joint 7 à l'envers, la bague vient en contact avec la surface conique 14 de l'alésage 9, et le renflement du tube 3 est en appui sur le bord intérieur de la bague métallique 6 dans une zone de diamètre réduit ; il est alors impossible de visser la douille 5 dans l'alésage 15, la longueur L de l'ensemble bague 6 et renflement 17 étant choisie au moins égale à la distance D séparant le bord extérieur de la surface conique 14 de la face d'extrémité 8 du corps.

## Revendications

1. Raccord hydraulique entre un corps (2) délimitant un conduit (10) de passage d'un fluide hydraulique et une extrémité (16) d'un tube métallique (3) de passage de ce même fluide, le conduit (10) comportant une embouchure (9) qui est formée de l'intérieur vers l'extérieur du corps (2) de trois alésages coaxiaux successifs (11,12,15), respectivement un premier alésage (11) et un deuxième alésage (12) de diamètre plus grand qui se raccorde au premier alésage (11) par un épaulement (14), et un troisième alésage (15) fileté intérieurement, ce raccord étant muni d'un ensemble de raccordement comportant une garniture d'étanchéité (7) en élastomère logée et serrée entre le tube (3) et le premier alésage (11) formant un logement annulaire de longueur supérieure à celle de la garniture (7), une bague (6) de retenue du tube (3) logée dans le deuxième alésage (12), en appui contre l'épaulement (14), et une douille (5) filetée extérieurement vissée dans le troisième alésage (15), pour bloquer axialement la bague (6) et le tube (3) par rapport au corps (2), caractérisé en ce que l'ensemble de raccordement est porté par le tube (3), et en ce que l'épaulement (14) est sensiblement tronconique et constitue une rampe ayant une double fonction de coopération avec la garniture (7), pour comprimer cette dernière et la placer sous serrage entre le tube (3) et le premier alésage (11), et avec une partie d'extrémité de forme complémentaire de la bague (6), pour déformer radialement cette bague (6) en direction du tube (3) lorsque la douille (5) est vissée dans le corps (2).

2. Raccord hydraulique selon la revendication 1, caractérisé en ce que le tube (3) comporte un renflement (17) et la bague (6) comporte dans sa paroi interne un évidement (22) adapté pour recevoir ledit renflement (17) et assurer la retenue axiale du tube (3), dans la direction de l'extérieur vers l'intérieur du corps, et en ce que la rampe guide la compression de la garniture d'étanchéité (7) lors de sa mise en place avec serrage contrôlé entre le tube (3) et le premier alésage (11) du corps (2).

3. Raccord hydraulique selon la revendication 2, caractérisé en ce que le renflement (17) du tube (3) et une partie de l'évidement (22) de la bague (6) sont de forme sensiblement sphérique.

4. Raccord hydraulique selon l'une quelconque des revendications 2 et 3, caractérisé en ce que la longueur axiale du renflement (17) est supérieure à celle de l'évidement (22) de sorte que l'extrémité de la douille coopère avec le renflement et ainsi assure la retenue axiale du tube dans la direction de l'intérieur vers l'extérieur du corps.

5. Raccord hydraulique selon l'une quelconque des revendications 1 à 4, caractérisé en ce que la garniture d'étanchéité (7) est adhérisée sur la face d'extrémité adjacente de la bague (6).

6. Raccord hydraulique selon l'une quelconque des revendications 1 à 5, caractérisé en ce qu'un dégagement (22) est prévu entre le bord extérieur de la garniture (7) et l'extrémité intérieure (19) de la bague (6).

7. Raccord hydraulique selon l'une quelconque des revendications 2 à 6, caractérisé en ce que la longueur (L) de l'ensemble bague (6) et renflement (17) est sensiblement égale ou supérieure à la distance (D) séparant l'épaulement (14) de l'extérieur du corps (2).

## Claims

1. Hydraulic connection between a body (2) delimiting a flow duct (10) for a hydraulic fluid and one end (16) of a metal flow tube (3) for this same fluid, the duct (10) comprising a mouth (9) which is formed from the inside to the outside of the body (2) by three successive coaxial bores (11, 12, 15), respectively, a first bore (11) and a second bore (12) of larger diameter which is connected to the first bore (11) by a shoulder (14), and a third internally threaded bore (15), this connection being provided with a connecting assembly comprising a packing seal (7) made of elastomer which is accommodated and gripped between the tube (3) and the first bore (11) forming an annular housing which is longer than the packing (7), a retaining ring (6) for the tube (3) which is housed in the second bore (12), abutting on the shoulder (14), and an externally threaded bush (5) screwed into the third bore (15) in order to secure the ring (6) and the tube (3) axially relative to the body (2), characterised in that the connecting assembly is carried by the tube (3) and in that the shoulder (14) is substantially frustum-shaped and-constitutes a ramp having a double function of cooperating with the packing (7) in order to compress the latter and cause it to be gripped between the tube (3) and the first bore (11), and with an end part complementary in shape to the ring (6), in order to deform this ring (6) radially in the direction of the tube (3) when the bush (5) is screwed into the body (2).

2. Hydraulic connection according to claim 1, characterised in that the tube (3) comprises a boss (17) and the ring (6) comprises, in its inner wall, a recess (22) adapted to receive said boss (17) and ensure that the tube (3) is axially retained, in the direction from the outside to the inside of the body, and in that the ramp guides the compression of the packing seal (7) when put into position with controlled gripping between the tube (3) and the first bore (11) of the body (2).

3. Hydraulic connection according to claim 2, characterised in that the boss (17) of the tube (3) and part of the recess (22) of the ring (6) are substantially spherical in shape.

4. Hydraulic connection according to one of claims 2 and 3, characterised in that the axial length of the boss (17) is greater than that of the recess (22) so that the end of the bush co-operates with the boss and thus ensures that the tube is axially retained in the direction from the inside to the outside of the body.

5. Hydraulic connection according to one of claims 1 to 4, characterised in that the packing seal (7) is adhesively bonded to the end face adjacent to the ring (6).

6. Hydraulic connection according to one of claims 1 to 5, characterised in that an opening (22) is provided between the outer edge of the packing (7) and the inner end (19) of the ring (6).

7. Hydraulic connection according to any one of claims 2 to 6, characterised in that the length (L) of the assembly comprising the ring (6) and boss (17) is substantially equal to or greater than the distance (D) separating the shoulder (14) from the outside of the body (2).

## Patentansprüche

1. Hydraulische Kupplungsvorrichtung zwischen einem Körper (2), welcher eine Leitung (10) einer Hydraulikfluid-passage umgibt, und einem Ende (16) einer metallischen Röhre (3) als Passage für dasselbe Fluid, wobei die Leitung (10) eine Öffnung (9) aufweist, die vom Inneren zum Äußeren des Körpers (2) mit drei aufeinanderfolgenden koaxialen Bohrungen (11, 12, 15) gebildet ist, nämlich einer ersten Bohrung (11) und einer zweiten Bohrung (12) mit einem größeren Durchmesser, welche sich an die erste Bohrung (11) über eine Schulter (14) anschließt, und einer dritten Bohrung (15), welche ein Innengewinde aufweist, wobei die Kupplungsvorrichtung mit einer Kupplungsanordnung ausgestattet ist, welche eine Gleitringdichtung (7) aus einem Elastomer aufweist, die zwischen der Röhre (3) und der ersten Bohrung (11) angeordnet und eingepreßt ist, welche einen ringförmigen Raum größerer Länge wie der der Ringdichtung (7) bildet, wobei ein Haltering (6) der Röhre (3) in der zweiten Bohrung (12) anstoßend an die Schulter (14) angeordnet ist, und wobei eine Buchse (5) mit einem Außengewinde in die dritte Bohrung (15) eingeschraubt ist, um den Ring (6) und die Röhre bezüglich des Körpers (2) axial zu blockieren, dadurch gekennzeichnet, daß die Kupplungsanordnung durch die Röhre (3) getragen ist und daß die Schulter (14) im wesentlichen kegelstumpfartig verläuft und aus einer Rampe gebildet ist, welche eine Doppelfunktion des Zusammenwirkens mit der Ringdichtung (7) hat zum Komprimieren der letzteren und zum Setzen derselben unter Druck zwischen der Röhre (3) und der ersten Bohrung (11) sowie zum radialen Deformieren des Ringes (6) mit einem Teil des Endes mit einer zum Ring (6) komplementären Form in Richtung der Röhre (3), bis die Buchse (5) in den Körper (2) geschraubt ist.

2. Hydraulische Kupplungsvorrichtung nach Anspruch 1, dadurch gekennzeichnet, daß die Röhre (3) eine Verstärkung (17) aufweist und der Ring (6) an seiner Innenwand eine Ausnehmung (22) aufweist, die derart gestaltet ist, daß die Verstärkung (17) darin aufnehmbar ist, und daß sie das axiale Festhalten der Röhre (3) in der Richtung von außen nach innen gewährleistet, und daß die Rampe die Komprimierung der Gleitringdichtung (7) führt, bis sie an ihrem Ort ist, wodurch der Druck zwischen der Röhre (3) und der ersten Bohrung (11) des Körpers (2) steuerbar ist.

3. Hydraulische Kupplungsvorrichtung nach Anspruch 2, dadurch gekennzeichnet, daß die Verstärkung (17) der Röhre (3) und ein Teil der Ausnehmung (22) des Rings (6) im wesentlichen sphärisch gebildet sind.

4. Hydraulische Kupplungsvorrichtung nach einem der Ansprüche 2 und 3, dadurch gekennzeichnet, daß die axiale Länge der Verstärkung (17) größer ist als diejenige der Ausnehmung (22), so daß das Ende der Buchse mit der Verstärkung zusammenwirkt und ebenso das axiale Festhalten der Röhre in der Richtung vom Inneren zum Äußeren des Körpers gewährleistet.

5. Hydraulische Kupplungsvorrichtung nach einem der Ansprüche 1 bis 4, dadurch gekennzeichnet, daß die Gleitringdichtung (7) auf der Oberfläche des Endes neben dem Ring (6) anhaftet.

6. Hydraulische Kupplungsvorrichtung nach einem der Ansprüche 1 bis 5, dadurch gekennzeichnet, daß ein Podest (22) zwischen der äußeren Grenze der Ringdichtung (7) und dem inneren Ende (19) des Ringes (6) vorgesehen ist.

7. Hydraulische Kupplungsvorrichtung nach einem der Ansprüche 2 bis 6, dadurch gekennzeichnet, daß die Länge (L) der Anordnung des Rings (6) und der Verstärkung (17) im wesentlichen gleich oder größer ist wie der Abstand (D), der die Schulter (14) von dem Äußeren des Körpers (2) trennt.
